# EUROPÄISCHE PATENTANMELDUNG

(11) **EP 2 654 381 A1**
(43) Veröffentlichungstag der Anmeldung: **23.10.2013**
(21) Anmeldenummer: 13001926.8
(22) Anmeldetag: 12.04.2013
(51) Int. Cl.: H05B 37/02

(54) **Netzübertragungssystem mit Steuerung, Leitung und Empfänger**

(30) Priorität: 17.04.2012 DE 102012007497
(71) Anmelder: Hidde, Axel R., 57076 Siegen (DE); Walter, Bernhard, 76703 Kraichtal (DE)
(72) Erfinder: Dr.-Ing. Axel R. Hidde, 57076 Siegen (DE); Bernhard Walter, 76703 Kraichtal (DE); Hidde, Axel R., DE - 57076 Siegen (DE); Walter, Bernhard, De - 76703 Kraichtal (DE)

(57) **Zusammenfassung**

Vorgestellt wird ein Netzübertragungssystem mit Steuerung, Leitung und Empfänger - insbesondere für das Übertragen eines Vorschaltgeräte-Dimmniveaus an ein elektronisches Vorschaltgerät über eine Wechselstromzuleitung.

Eine Netzleitungssteuerung - wie ein Power-line Controller (PLC) - ist dazu eingerichtet, das Vorschaltgerätesteuersignal zu erzeugen und dieses Signal mit dem Wechselstromversorgungssignal - Power-line - zu verbinden, das über die Versorgungsleitung übertragen wird. Ein Netzleitungsempfänger - Power-line Receiver - empfängt das Wechselstromversorgungssignal und dekodiert das Vorschaltgerätesteuersignal vom Wechselstromversorgungssignal, um das Dimmniveausignal abzuleiten, welches dem geforderten Vorschaltgeräte-Dimmniveau entspricht.

Das Netzübertragungssystem ist vorgesehen für das Steuern von elektrischen Geräten - insbesondere von Leuchten und hier Außenleuchten und Light-emitting Diode (LED)-Außenleuchten, wie sie in der Straßen- und Verkehrsbeleuchtung zur Anwendung kommen, die an ein gemeinsames Stromversorgungsnetz angeschlossen sind, über das die elektrischen Geräte als Netzleitungsempfänger mittels eines Netzleitung -übertragungsverfahrens Informationen mit der Netzleitungssteuerung über die Netzleitung austauschen.

Eine Netzleitungssteuerung, wie ein mikroprozessorgesteuerte Phasenkontroller, erzeugt und sendet positive sinusförmige Halbwellen, die auch ebenfalls die Leuchtenkodierung für Vorschaltgerät und Lampe beinhalten - den Stromnetz-Datenbus - eine halbwellenkodierte Netzzuleitung. Der Netzleitungsempfänger, das Vorschaltgerät, empfängt die Halbwellen, paßt die elektrischen Werte der Lampenschaltung an, wertet die Nachrichten aus und steuert die Lichtleistung der Lampe. Durch das Unterbrechen des Sendens einzelner Halbwellen durch die Netzleitungssteuerung wird eine Kodierung geschaffen, die auf der Empfängerseite durch 'Dekodierung der Netzspannung' als Steuersignal ausgewertet wird. Das Vorschaltgerät verfügt über ausreichend elektrischen Speicher, um das Fehlen einer Halbwelle kaum sicht- oder wahrnehmbar werden zu lassen. Die Leuchteneinschaltzeitpunkte sind zufallgesteuert.

## Beschreibung

Die Erfindung betrifft ein Netzübertragungssystem mit Steuerung, Leitung und Empfänger - insbesondere für das Übertragen eines Vorschaltgeräte-Dimmniveaus an ein elektronisches Vorschaltgerät über eine Wechselstromzuleitung.

Eine Netzleitungssteuerung - Power-line Controller (PLC) - ist dazu eingerichtet, das Vorschaltgerätesteuersignal zu erzeugen und dieses Signal mit dem Wechselstromversorgungssignal - Power-line - zu verbinden, das über die Versorgungsleitung übertragen wird. Ein Netzleitungsempfänger - Power-line Receiver - empfängt das Wechselstromversorgungssignal und dekodiert das Vorschaltgerätesteuersignal vom Wechselstromversorgungssignal, um das Dimmniveausignal abzuleiten, welches dem geforderten Vorschaltgeräte-Dimmniveau entspricht.

Das Netzübertragungssystem ist vorgesehen für das Steuern von elektrischen Geräten - insbesondere von Leuchten und hier Außenleuchten und Light-emitting Diode (LED)-Außenleuchten, wie sie in der Straßen- und Verkehrsbeleuchtung zur Anwendung kommen, die an ein gemeinsames Stromversorgungsnetz angeschlossen sind, über das die elektrischen Geräte als Netzleitungsempfänger mittels eines Netzleitungsübertragungsverfahrens Informationen mit der Netzleitungssteuerung über die Netzleitung austauschen.

Außenleuchten in der Straßen- und Verkehrsbeleuchtung werden heute weniger häufig nach einem relativ starren Muster gesteuert bzw. geschaltet und gedimmt. Die Einschaltung der Leuchten erfolgt tages-/dämmerungslichtgesteuert, gegen 22 h, 24 h und/oder 2 h erfolgt eine 30%-ige, 50%-ige oder 100%-ige Dimmung der Lampen, die dann üblicherweise ab 4 h oder 5 h morgens wieder zurückgefahren wird, bis die Leuchten tageslichtgesteuert abgeschaltet werden. Für diese Beleuchtungsaufgabe ist ein Rücksignal nicht erforderlich; defekte Netzstränge oder defekte Lampen in Netzsträngen werden durch Veränderungen in der Leistungsmessung ermittelt. Insofern reichen einfache Protokollstrukturen - wie z.B. die für die Digital Multiplex (DMX)-Beleuchtungssteuerung - aus, da das Protokoll außer dem aus wenigen Bit bestehenden Dimmwert oder der Dimmstellung keine weiteren Informationen beinhaltet. Sollen Leuchten innerhalb eines Strangs angesprochen werden, ist die Einführung einer Adressierung optional möglich.

Bei der kommunalen Erschließung neuer Wohn- oder Industriegebiete wird für die Steuerung der Außenbeleuchtung vorgesorgt; für die Beleuchtung werden Kabel der Güte 4 x 16 mm² oder 5 x 16 mm² von Leuchte zu Leuchte geschleift, die zusätzlich eine 2-adrige Steuerleitung für ein Bussystem besitzen. Beim kommunalen Altbestand fehlt die Steuerleitung und es wird auf die Möglichkeiten der Netzübertragung zurückgegriffen. Üblicherweise werden die Versorgungsleitungen selbst für die Datenübertragung genutzt, indem auf die normale Netzfrequenz von f = 50 Hz eine modulierte höherfrequente Trägerfrequenz aufgebracht wird. Die Trägerfrequenz enthält in verschlüsselter Form die zu übertragenden Informationen, welche von entsprechenden Empfängern entschlüsselt werden. Eine Übersicht über verschiedene Funktionsweisen und Möglichkeiten bietet Dostert, K.: Power-line-Kommunikation, Franzis Verlag, Poing; weitere Verfahren zur Übertragung von digitalen Informationen über das Stromversorgungsnetz sind in den Patentschriften DE 40 01 265, DE 40 01 266, EP 634 842 und EP 200 016 beschrieben.

Die vorliegende Entwicklung stellt ein Verfahren und eine technische Realisierung eines Netzübertragungssystems mit Steuerung, Leitung und Empfänger für geringe und weniger häufig zu übertragende Informationsvolumen vor, wie es bei der Steuerung von Außenleuchten - insbesondere LED-Außenleuchten - benötigt wird, wobei die Netzspannung selbst Träger der Information ist, unter Einsatz der Netzleitungssteuerung nach Patentanmeldung DE 10 2010 052 564 bzw. Gebrauchsmuster DE 20 2010 015 424.

Im folgenden wird der Stand der Technik von Netzübertragungssystemen mit Steuerung, Leitung und Empfänger - insbesondere für das Übertragen eines Vorschaltgeräte-Dimmniveaus an ein elektronisches Vorschaltgerät über eine Wechselstromzuleitung - gewürdigt; gemäß dem Stand der Technik sind, je nach Anwendungsbezug, eine Vielzahl von Typen von Netzübertragungssystemen mit Steuerung, Leitung und Empfänger - insbesondere für das Übertragen eines Vorschaltgeräte-Dimmniveaus an ein elektronisches Vorschaltgerät über eine Wechselstromzuleitung - im Einsatz.

In Maxim Integr. Prod. Applic. Note Nr. 53 47 Power-line Communications for Street Lighting Automation', Mrz. 2012, wird an zwei Beispielen 'Tunnel Lighting: A Real-World PLC Example' und 'Optimizing the Lighting Automation System' die Automatisierung der Außenbeleuchtung mit Hilfe eines integrierten Funktionsbausteins Typ MAX2992 vorgestellt. Die Netzübertragungstechnik eignet sich in hervorragender Weise für das Nachrüstgeschäft, da eine energieeinsparende Automatisierung des Anlagenbestands ohne Eingriff in die Infrastruktur vollzogen werden kann
- Genaue Ein-/Aus-Schaltzeiten in Abhängigkeit der Lage, des astrologischen Kalenders und den Wetterbedingungen
- Energiesparendes Dimmen während der Morgen-/Abend-Dämmerung und der Nacht - insbesondere bei Tunnel-Ein-/Ausgangsportalen
- Verkehrssteuerung durch Dimmung
- Verkehrsüberwachung
- Lampenfehler-Anzeige
- Lampenwartung-Anzeige in Abhängigkeit von Temperatur, Strom, Leistungsfaktor oder Betriebsstunden
- Not-/Störfall-Ein-/Aus-/Stufen-Steuerung
- Echtzeit-Aufzeichnung des Energieverbrauchs.

Der Einsatz dieser Steuerung für die Außenbeleuchtung ist eher im High-end-Bereich einer Tunnel-Ausleuchtung - besser Tunnel-Verkehrflußsteuerung - zu sehen als für die Schalthandlung an einem Leuchtenstrang eines Straßenabschnitts.

Die Offenlegung DE 10 2010 029 219 offenbart eine netzgebundene Datenübertragungseinrichtung, wo über an die 50 Hz-, 60 Hz- oder 400 Hz-Netzleitungen kapazitiv angekoppelte Adapter Daten auf die Netzleitung sendeseitig moduliert und empfängerseitig spiegelsymmetrisch demoduliert werden. Die benutzten Netzleitungsstränge sind durch induktive Filterbausteine von am Netz angeschlossenen Geräten getrennt; zwischen den Filterbausteinen befinden sich keine Anschlüsse von elektrischen Geräten, die die Kommunikation störend beeinflussen.

Zur Datenübertragung können nicht nur nachrichtentechnisch spezifizierte, extra geschirmte Übertragungsleitungen verwendet werden, sondern auch Netzleitungen oder Leitungen mit nicht ausreichender Schirmung - wie zwischen Gebäudeteilen oder Schaltschränken oder mittels Stromschienen - wenn geeignete Filter- und Koppelbausteine zum Einsatz kommen.

Die Offenlegungsschrift DE 10 2010 000 203 präsentiert in Ausführungsbeispielen Varianten eines Entstörkonzepts für ein elektronisches Vorschaltgerät für Gasentladungslampen, denen ein die Entstörung bewirkender Kondensator gemeinsam ist, der den Lampenkreis mit der Netzleitung verbindet. Diese Konzept, angewendet auf verschiedene Ausführungsformen und Schaltungen von Vorschaltgerätekomponenten - wie Netzgleichrichter, Hochsetzsteller, Voll- und Halbbrückenwechselrichter sowie Zündvorrichtungen und Lampenkreis - gestattet eine wirksame Ableitung von Störsignalen, so daß diese nicht über ein tolerierbares Maß hinaus von den Leitungen des Lampenkreises abgestrahlt werden.

Eine wirksame Entstörung des elektronischen Vorschaltgeräts ist für den Betrieb mit Netzleitungssteuerung zwingend erforderlich.

Die Offenlegungsschrift DE 10 2009 011 208 stellt ein Netzübertragungssystem vor für die Übertragung eines Vorschaltgeräte-Dimmniveaus an ein elektronisches Vorschaltgerät für Gasentladungslampen über eine Wechselstromnetzleitung. Um das Vorschaltgerätsteuersignal in das Wechselstromversorgungssignal einzufügen, weist die Netzleitungssteuerung einen mit dem Signalmusterkreis gekoppelten Transformator auf, dessen Sekundärwicklung in Reihe mit der Wechselstromnetzleitung geschaltet ist. Nach der Übertragung des Wechselstromversorgungssignals an das elektronische Vorschaltgerät, wird das Vorschaltgerätsteuersignal dem Wechselstromversorgungssignals im Netzleitungsempfänger mittels eines in Reihe mit der Wechselstromnetzleitung geschalteten Resonanzkreises abgezweigt. Der Resonanzkreis ist so abgestimmt, daß er das Vorschaltgerätesteuersignal überträgt und das Wechselstromversorgungssignal herausfiltert. Ein Dimmniveaubestimmungskreis erfaßt das Signalmuster auf dem Vorschaltgerätesteuersignal und erzeugt ein Dimmniveausignal, das mit dem gewünschten Vorschaltgerät-Dimmniveau übereinstimmt. Auf Seiten der Netzleitungssteuerung - primärseitig - wird eine höherfrequente, informationsbehaftete Spannung auf die Netzzuleitung aufmoduliert und sekundärseitig im Vorschaltgerät durch einen Reihenschwingkreis induktiv ausgekoppelt und über einen Dekoder als Dimmniveausignal dem Invertersteuerkreis der Gasentladungslampe zugeführt. Der sekundärseitige Resonanzkreis ist exakt mit dem primärseitigen Modulationskreis und der Steuerung und Empfänger verbindenden Kabelstrecke abzustimmen; das aufmodulierte Signal unterliegt in Abhängigkeit der charakteristischen Eigenschaften der Kabelstrecke einer Dämpfung. Die Modulationsfrequenz ist nach oben auf ca. 1,5 MHz begrenzt.

Die Offenlegung DE 10 2006 015 712 offenbart ein Alternating Current (AC)/Direct Current (DC)-Power-line-Kommunikationsmodem, welches sowohl für den Mittelspannungs-50 Hz/60 Hz-Netzleitungsbetrieb als auch für Leitungen künftiger Gleichspannungsnetze 12 V/24 V/42 V ausgelegt ist. Das AC/DC-PLC-Modem mit dualem Modus ist fähig, auf die Netzleitung eines Wechselstrom- oder Gleichstromnetzes zuzugreifen. Das Gerät umfaßt eine AC/DC-Schutzschaltung, eine AC/ DC-Konfigurationsschaltung, eine AC/DC-Koppler-/Filterschaltung, einen AC/DC-Umrichter und einen DC/DC-Umrichter. Die Schutzschaltung ist mit dem Stromnetz gekoppelt und empfängt einen Wechsel- oder einen Gleichstrom aus dem Netz. Die Konfigurationsschaltung ist mit der Schutzschaltung verbunden; mit ihr wird das PLC-Modem in der Betriebsart AC- oder DC-Modus je nach Netzbetrieb konfiguriert. Die Kopplungs- und Filterschaltung koppelt und filtert den empfangenen Wechsel- oder Gleichstrom und stellt einen ersten Gleichstrom bereit. Der AC/DC-Umrichter richtet die Wechselspannung und stellt eine zweite Gleichspannung zur Verfügung; ebenso wie der DC/DC-Umrichter weitere Gleichspannungen für analogen und digitalen Schaltungen des PLC-Modems bietet.

Das PLC-Modem ist sicherlich zukunftsorientiert sinnvoll und notwendig, jedoch für den hier vorgesehenen Einsatz zu aufwendig.

Die Offenlegungsschrift DE 10 2005 030 572 beschreibt eine Stromleitungskommunikation (PLC), wie sie als Kommunikationsverfahren für das Steuern verschiedener Typen elektrischer Ausrüstung, die in einem Automobil installiert sind - wie ein motorbetriebenes Fenster oder der Fensterheber oder ein Scheibenwischer - verwendet wird. Das Kommunikationssystem umfaßt eine Hauptstromleitung und eine Vielzahl von PLC-Netzen, die gemeinsam mit der Hauptstromleitung verbunden sind. Mindestens eines der PLC-Netzes umfaßt eine Vielzahl von Knoten; ein Knoten der Knoten im PLC-Netz ist mit der Hauptstromleitung verbunden, während die anderen Knoten über eine Nebenstromleitung miteinander verbunden sind, um Leistung von der Hauptstromleitung in die Nebenstromleitung zu leiten. Eine Induktivität in einem Knoten verbindet Haupt- und Nebenstromleitung.

Die Hauptstromleitung ist mit einer Batterie verbunden, so daß hier ein Informationsträger auf eine Gleichspannung moduliert wird.

Die deutsche Offenlegungsschrift DE 101 28 258 stellt ein Power-line-Steuersystem für die Straßenaußenbeleuchtung zum Steuern von elektrischen Geräten bzw. Leuchten vor, die an ein gemeinsames Stromversorgungsnetz angeschlossen sind.

Dabei tauschen die elektrischen Geräte mittels eines Power-line-Verfahrens Informationen mit einer Steuereinheit über das Stromversorgungsnetz aus, wobei die elektrischen Geräte derart zueinander synchronisiert sind, daß sie in vorgegebenen Sende- und Empfangszyklen Informationen über das Stromversorgungsnetz empfangen bzw. in dieses senden. Dabei wirkt jedes elektrische Gerät als Repeater, indem es eine in einem Sende- und Empfangszyklus empfangene Information - auch als Telegramm bezeichnet - in einem folgenden Sende- und Empfangszyklus wieder in das Stromversorgungsnetz sendet. Ein an einer beliebigen Stelle in das Stromversorgungsnetz eingespeistes Telegramm breitet sich momentan über das gesamte Netz aus, bis es von dem adressierten elektrischen Gerät gelesen wird. Durch die Synchronisation wird kein von zwei benachbarten elektrischen Geräten gesendeten identischen Telegramms gelöscht. Die Datenübertragung erfolgt durch einen Phasenmodulation der Trägerfrequenz - Phase Shift Keying (PSK); eine Synchronisation der verschiedenen Leuchten erfolgt durch Überwachung der Netzfrequenz. Eine zeitliche Strukturierung der Datenübertragung wird mittels einer Telegrammstruktur - wie Anwender- und Systemtelegramme - realisiert.

Das Power-line-Steuersystem beinhaltet ein vollständiges in Telegrammen organisiertes synchronisiertes Bussystem, indem die Leuchten die Endgeräte darstellen.

Alle vorgestellten Veröffentlichungen eignen sich nur bedingt oder gar nicht für den spezifischen Einsatz als Netzübertragungssystem mit Steuerung, Leitung und Empfänger - insbesondere nicht für das Übertragen eines Vorschaltgeräte-Dimmniveaus an ein elektronisches Vorschaltgerät über eine Wechselstromzuleitung.

Der Erfindung liegt daher die Aufgabe zu Grunde, eine Einrichtung nach dem Oberbegriff des Anspruchs 1, ein Netzübertragungssystem mit Steuerung, Leitung und Empfänger - insbesondere für das Übertragen eines Vorschaltgeräte-Dimmniveaus an ein elektronisches Vorschaltgerät über eine Wechselstromzuleitung - zu schaffen.

Diese Aufgabe wird erfindungsgemäß durch die kennzeichnenden Merkmale des Anspruchs 1 gelöst; auf vorteilhafte Ausgestaltungen nehmen die Unteransprüche Bezug. Ziel ist der Aufbau eines einfachen Netzübertragungssystems mit Steuerung, Leitung und Empfänger - insbesondere für das Übertragen eines Vorschaltgeräte-Dimmniveaus an ein elektronisches Vorschaltgerät über eine Wechselstromzuleitung.

Vorgestellt wird ein Netzübertragungssystem bestehend aus einer vorzugsweise 3-phasigen Netzleitungssteuerung, einer 1- oder mehrphasigen Netzleitung und einem 1-phasigen Netzleitungsempfänger, der vorzugsweise auch das Vorschaltgerät für - vorzugsweise eine LED-Außenleuchte beinhaltet. Die Netzleitungssteuerung ist ein nulldurchgangsschaltender Phasenkontroller, wie er in der Patentanmeldung DE 10 2010 052 564 bzw. Gebrauchsmuster DE 20 2010 015 424 ausführlich behandelt wird. Die Steuerung wird händisch fern-/geschaltet oder über eine Zeitschaltuhr, einen Tageslichtsensor oder Dämmerungsschalter ferngeschaltet; lokal ist das Steuermodul in einer Elektroverteilung untergebracht und versorgt und steuert die Aussenbeleuchtung eines Straßenzugs mit bis zu 100 Leuchten bzw. Lampen. Die Verkabelung der Leuchten kann strang- und phasengerecht erfolgen mit 3-poliger Kabelverlegung L1, N, PE an jede Leuchte des Strangs oder aber auch phasenweise alternierend mit 5-poliger Kabelverlegung, d.h. Phase 1 an Leuchte 1, ... , Phase 3 an Leuchte 3, Phase 1 an Leuchte 4, etc., durchgeschleift über jede Leuchte des Strangs.

Eine Ausprägungsform der erfinderischen Neuheit ist dadurch gegeben, daß der elektromagnetische 2-Zustands-Leistungsschalter durch einen mikroprozessorgesteuerten Phasenkontroller ersetzt wird. Der Phasenkontroller besteht aus einer Brücke mehrphasig gegeneinander geschaltet/antiparallel gesteuerter Thyristoren, die wie ein elektrisches Ventil pro Phase in der mehrpoligen Zu- und Ableitung liegen und je ihren Steueranschluß mit dem Mikrokontroller verbunden haben. Im Mikrokontroller hinterlegte Steuer-Software vorausgesetzt und mit notwendiger Sensorik verbunden, lassen sich mit dieser Anordnung bereits oben genannte Standard-Applikationen, wie Ein-/Aus-Schaltfunktion bei Phasen-Nulldurchgang, Phasenanschnittsteuerung, Vollwellensteuerung oder Impulspaketsteuerung, realisieren. Beim Schalten größerer Leistungen sind die Thyristoren durch Triode for Alternating Current (TRIAC)-Bauelemente - zwei Thyristoren antiparallel in einem Bauelement angeordnet - ersetzt. Alternativ können auch Insulated-Gate Bipolar Transistor (IGBT)-Bauelemente verwendet werden, die einen beliebigen Ein- und Ausschaltzeitpunkt über die Halbwelle gestatten - während der Thyristor in einer Halbwelle gezündet wird und beim Nulldurchgang erlischt - Phasenanschnittsteuerung.

Gemäß einer weiteren Ausgestaltung der Erfindung besteht der Aufbau des Phasenkontrollers aus einer bestückten Steuerplatine für die Zündung der Thyristoren anhand von Strom- und Spannungsreferenzwerten sowie Berechnung von Referenzwerten, wie des Leistungsfaktors, der Wirkleistung, etc., und dem Speichern von Daten für die Trendberechnung, Historienverfolgung, Statistiken, etc. für die Steuerung. Thyristoren sind in Antiparallelschaltung angeschlossene, ein- oder mehrphasig in den Netzstromkreis eingebrachte Halbleiterbauelemente. Sie regeln durch Anhebung oder Absenkung die Spannung beim Anfahren oder Auslaufen, schalten vorzugsweise im Phasennulldurchgang nach Vorgabe des Zündwinkels; während des kontinuierlichen Betriebs sind die Thyristoren voll leitend. Wie oben dargestellt, sind die Thyristoren elektrisch isoliert und über beste Wärmeübergangszahlen mit Kühlrippenkörpern und/oder Gehäusen verbunden; die Kühlrippenkapazität hängt von der Anlaufleistung und dem Betriebsstrom ab. Die Kühlrippenleistung wird durch Lüfter gesteigert.

Bei mikroprozessorgesteuerten Phasenkontrollern werden verschiedene Spannungen mit verschiedenen Bezeichnungen gemäß IEC-Norm verwendet
- die Hauptspannung Ue ist die Speisespannung des Antriebs sowie die Spannung, die am Hauptschaltkreis der Thyristoren im Halbleiterschalter anliegt, Werte liegen zwischen 200 V ... 690 V
- die Speisespannung Us ist die Spannung, die an der Steuerplatine anliegt und mit der die elektronischen Bauteile der bestückten Platine versorgt werden, Werte sind 110 V ... 120 V bzw. 220 V ... 240 V
- die Steuerspannung Uc steuert das Anlauf- und Auslaufkommando des Halbleiterschalters, Werte 24 V ... 480 V.

Die elektrische Dimensionierung des Phasenkontrollers ist applikationsabhängig; der Nennstrom eines Verbrauchers, der über den Halbleiterschalter fließt, ist erheblich niedriger als der Einschaltstrom.

Eine weitere Ausgestaltung der Erfindung sieht vor, daß ein zentraler Mikrokontroller die Steuerung des Phasenkontrollers besorgt. Nach Wahl der Applikation und der Betriebs-Software werden die Zündimpulse an die ein- oder mehrphasig angeordneten Thyristoren/TRIAC ausgegeben; die Temperatur der Brücke wird vom Mikrokontroller überwacht. Der Mikrokontroller erfaßt die Pull-down (PD)-Meldung um die Halbleiter im Nulldurchgang auszuschalten. Ausgehend von einer 3-Leiter-Anordnung mit Nulleiter und Schutzerde wird dauerhaft eine Fehlerstrom (FI)-Analyse durchgeführt und das Ergebnis dem Mikrokontroller übermittelt, kombiniert mit einer Temperaturüberwachung durch Temperatursensoren. Über 3-phasig angeordnete Stromübertrager werden die Ausgangsströme proportional mittels Hall-Sensoren aufgezeichnet und nach vorgegebenen Parametern ausgewertet und im Mikrokontroller verarbeitet. Auch hier üben Temperatursensoren Schutzfunktionen aus. Betriebszustände werden vom Mikrokontroller über eine LED-Leiste angezeigt.

Eine Besonderheit in einer weiteren vorteilhaften Ausgestaltung der Erfindung liegt in der Betriebsweise des mikroprozessorgesteuerten Phasenkontrollers als Netzleitungssteuerung und ist durch zwei zusätzliche mehrpolige Relaisschalter gegeben
- Hauptrelais mit Überlasteinrichtung
- Beipaß-Relais.

Da Halbleiterbauelemente über keine der Vorschrift entsprechende Kriech- und Luftstrecke verfügen, muß in dem Netzstromkreis ein Hauptschalter vorgesehen werden; vorzugsweise wird diese Maßnahme mit einer thermischen und/oder magnetischen Uberlastabschaltung verbunden.

In einer weiteren vorteilhaften Ausgestaltung erzeugt und sendet der mikroprozessorgesteuerte Phasenkontroller positive sinusförmige Halbwellen, die auch ebenfalls die Leuchtenkodierung für Vorschaltgerät und Lampe beinhalten - den Stromnetz-Datenbus - was die Einfachheit des Systems ausmacht - eine halbwellenkodierte Netzzuleitung ohne Datenkabel, ohne Power-line-, ohne Hochfrequenz (HF)-Betrieb, keine DMX-Steuerung. Die Netzleitungssteuerung, der Phasenkontroller, sendet positive sinusförmige Halbwellen an das Vorschaltgerät der Leuchte oder Außenleuchte, wobei die Fläche unter der Halbwellenkurve die übertragene Energie bedeutet. Der Netzleitungsempfänger, das Vorschaltgerät, empfängt die Halbwellen, paßt die elektrischen Werte der Lampenschaltung an, wertet die Nachrichten aus und steuert die Lichtleistung der Lampe. Durch das Unterbrechen des Sendens einzelner Halbwellen durch die Netzleitungssteuerung wird eine Kodierung geschaffen, die auf der Empfängerseite durch 'Dekodierung der Netzspannung' als Steuersignal ausgewertet wird. Das Vorschaltgerät verfügt über ausreichend elektrischen Speicher, um das Fehlen einer Halbwelle kaum sicht- oder wahrnehmbar werden zu lassen. Außerdem finden Schalt- und Dimmhandlungen für die Außenbeleuchtung nur wenige Male im 24 h-Betrieb und in wenigen Schalt- und Dimmstufen statt.

Eine weitere Ausprägungsform der erfinderischen Neuheit ist dadurch gegeben, daß der Netzleitungsempfänger die gesendeten Halbwellen auswertet. Nach n Halbwellen folgt eine Pause von einer Halbwelle - Startbit 1, die der Empfänger registriert. Weiterhin werden jetzt die folgenden Halbwellen gezählt; es folgen drei Halbwellen, gefolgt wiederum von einer Pause - Startbit 2 - und nochmals drei Halbwellen und eine Pause. Je nach Kodierungsschlüssel werden weitere Halbwellenmuster gesendet und ausgewertet. Üblicherweise wird ein Muster als solches nach zwei Wiederholungen aus drei Sendungen als richtig interpretiert; es gibt auch andere Schlüssel, wie den 3 aus 5-Kodierungsschlüssel mit 3 Richtigen aus 5 Wiederholungen. Alle Vorschaltgeräte am Strang haben nach Auswertung/-zählung erkannt, daß eine Sendung eines jetzt bekannten Halbwellenmusters bevorsteht. Aus den nächsten drei Sendungen bestehend aus drei Halbwellen gefolgt von einer Pause oder einer Halbwelle, werden das Bit 3, Bit 4 und Bit 5 generiert, ein 3-Bit-Wort, welches sieben Ein-, Aus- und Dimm-Zustände abbilden kann, was sich für die Schalt- und Dimmhandlungen der LED-Außenbeleuchtung als völlig ausreichend darstellt. Auch ist die Kodierung und Generierung eines n-Bit-Worts mit n > 3 nach diesem Verfahren möglich.

Sollen vereinbarungsgemäß Leuchten bestehend aus Vorschaltgerät und Lampe nicht nur phasen- oder stranggesteuert sein, sondern optional adressierbar sein, wird gemäß einer weiteren Ausgestaltung der Erfindung ein weiteres Halbwellenmuster mit einem Stop-Bit, Bit 6, gesendet, gefolgt von z.B. weiteren Halbwellenmustern zwecks Generierung der Adressenbits 7 bis 12 auf der Empfängerseite zur Erzeugung eines 6-Bit-Worts für die Adressierung von max. 63 Leuchten - Vorschaltgeräten und Lampen - im einphasigen Strang. Mit einem 7-Bit-Wort können 127 Leuchten adressiert werden, etc. Bei einem mehrphasigen System - wie einem dreiphasigen Drehstromsystem - können mit einer 6-Bit-Wortadresse in drei Strängen 189 Leuchten und mit einer 7-Bit-Wort-adresse 381 Leuchten gesteuert werden. Der Sendevorgang für die Schalt- oder Dimmhandlung kann generell durch ein Anfangs-Bit eröffnet und ein Ende-Bit abgeschlossen werden.

Während wie beim Power-line-Verfahren auf die Netzleitung aufmodulierte höherfrequente Trägerfrequenzsignale einer leitungs- und leitungsumgebungabhängigen Dämpfung unterliegen, die sich bereits im Einige-Hundertmeter-Bereich bemerkbar machen kann, ist die Dämpfung beim Stromnetz-Datenbus mit halbwellenkodierter Netzübertragung nicht von Bedeutung; die Netze sind als Versorgungsnetze für diese 50 Hz-Anwendung ausgelegt. Der Stromnetz-Datenbus mit halbwellenkodierter Netzübertragung ist gemäß des vorgesehenen Einsatzzwecks unidirektional ausgelegt; für die Beleuchtungsaufgabe mit geringen und weniger häufig zu übertragenden Informationsvolumen ist kein Rücksignal erforderlich.

Eine weitere Ausprägung der Erfindung sieht vor, daß zur Vermeidung starker Netzschwankungen durch leistungsstarke Ein- und Abschaltvorgänge im Leuchtennetzkreis, die Netzleitungssteuerung zusätzlich mit einem Zufallszahlengenerator ausgestattet und den Schalt- und Dimmbefehlen noch eine Zufallszahl mitgegeben wird, die empfängerseitig als eine zeitverzögernde Einstellgröße für einen Zähler im Netzleitungsempfänger interpretiert wird, so daß die Schalt- oder Dimmhandlung erst nach Ablauf des Zählvorgangs zur Ausführung gelangt mit der Wirkung, daß mit großer Wahrscheinlichkeit keine zwei Leuchten gleichzeitig angesteuert werden und sich keine auffälligen Netzschwankungen ausbilden können. Im Umkehrschluß kann sich der Zufallszahlengenerator auch in jedem Netzleitungsempfänger des Vorschaltgeräts befinden, der dann angestoßen wird, wenn eine Schalt- oder Dimmhandlung für die Leuchte ansteht, und seine Zufallszahl zeitverzögernd auf das eigentliche Schalten oder Dimmen der Lampe - und mit großer Wahrscheinlichkeit niemals bei mehreren Lampen gleichzeitig - wirkt.

Das folgende Kapitel wird dem Aufbau und der Wirkweise des Netzleitungsempfängers gewidmet, der auch die Eigenschaften eines LED-Vorschaltgeräts in sich vereint. Der Netzleitungsempfänger besteht aus folgenden Komponenten
- AC-Eingang Netzspannung
- R/C/L-Netzfilter
- Gleichrichter
- Halbwellendetektor
- Siebglied / Entkoppeldiode
- DC/DC-Wandler
- Mikroprozessor / Pulsweiten-Modulation (PWM) 1
- Hochvolt (HV)-PWM 2-Regler
- LED-Lampe.

Eine weitere Ausprägungsform der erfinderischen Neuheit ist dadurch gegeben, daß die von der Netzleitungssteuerung - dem mikroprozessorgesteuerten Phasenkontroller - über die einphasige Netzleitung gesendete sinusförmige Halbwellen-Netzspannung an den AC-Eingang des Netzleitungsempfängers angeschlossen und über einen R/C/L-Netzfilter einem Brückengleichrichter zugeführt wird. Aus dieser Gleichspannung wird einerseits mittels eines Siebglieds die LED-Lampenversorgungsspannung und mittels eines DC/DC-Wandlers die Versorgungsspannung für den Mikroprozessor und den Hochvolt (HV)-Pulsweiten-Modulation (PWM) 2-Regler abgeleitet. Außerdem wird die Gleichspannung des Gleichrichters mit einem Halbwellendetektor verknüpft, der die gesendeten Halbwellen auf eine Halbwellen-Pausenunterbrechung prüft und das Ergebnis dem Mikroprozessor-Baustein übergibt. Das Siebglied enthält eine Entkoppeldiode sowie einen Ladekondensator, der die Energielücke der Halbwellen-Pausenunterbrechungen gegenüber der LED-Lampenversorgung nachlädt, so daß das menschliche Auge des Betrachters keine oder keine wesentlichen optischen Flackererscheinungen empfindet.

Gemäß einer weiteren Ausgestaltung der Erfindung filtert der Netzeingangsfilter Störungen aus und dient als Überspannungsschutz. Der Gleichrichter sorgt für eine sinusförmig gepulste Gleichspannung mit gleichgerichteten positiven Netzhalbwellen; die LED-Lampe liegt immer am Pluspol des Ladekondensators des Siebglieds - bedeutet eine Stromquelle. Der Ladekondensator überbrückt auch die Energielücken der Halbwellen-Pause. Die gesiebte Gleichspannung wird über den DC/DC-Wandler zur Versorgungsspannung für den Mikrokontroller und den HV-PWM 2-Regler. Der Halbwellen-Detektor detektiert die Lücken der Halbwellen-Pausen und bereitet das Signal für den Mikrokontroller auf. Der Mikrokontroller prüft die gesendeten Halbwellen auf eine vorliegende Störung oder ein zu sendendes Protokoll. Ein im Mikrokontroller implementierte Pulsweiten-Modulation (PWM) 1 bereitet eine Ein-/Aus-Tastung für die Pulsweiten-Modulation 2 des HV-Reglers vor nach Interpretation der Netzhalbwellen als Protokoll für die Helligkeits-Einstellung. Der Hochvolt (HV)-Pulsweiten-Modulation (PWM) 2-Regler besteht einerseits aus einer Strombegrenzung, der den maximalen Strom der Stromquelle begrenzt, sowie andererseits aus einem Metall-Oxid-Halbleiter-Feldeffekttransistor (MOSFET)-Schalter, der den Strom gegen Masse schaltet und eine Stromsenke für den Lampenstrom darstellt. Ist der Schalter offen - hochohmiger Zustand - fließt der LED-Lampenstrom in voller Höhe, es wird kein Lampenstrom abgeleitet. Ist der Halbleiterschalter gegen Masse geschlossen - niederohmiger Betriebszustand - kommt es zum Stromfluß, der Strom durch die LED-Anordnung wird zerhackt. Die Dauer der 'Offen'- und 'Geschlossen'-Schaltzustände des PWM 2-Reglers wird mittels des PWM 1-Reglers des Mikroprozessors vorbereitet.

Eine weitere Ausgestaltung der Erfindung sieht vor, daß mit zwei elektronischen Bauelementen, dem Mikroprozessor- und dem PWM 2-Regler-Baustein, die Helligkeit der LED-Lampenanordnung am Transistor-Ausgang eingestellt wird; der Transistor-Ausgang ist niemals dauerhaft geschlossen, so daß Strom durch die LED-Lampe fließt. Bei einem maximal zulässigen Strom von 1 A werden die entsprechenden Dimmwerte 30%, 50%, 70%, ... , am PWM 1-Regler des Mikroprozessors nach Interpretation der Halbwellen gebildet und für die Beeinflussung des LED-Lampenstroms an den HV-PWM 2-Regler übertragen. Der Mikrokontroller-Ausgang kann nicht direkt den Lampenstrom beeinflussen; die Lösung wäre ebenfalls technisch möglich, würde aber einen aufwendigeren Mikrokontroller-Baustein erfordern. Die Stromabfrage muß zyklisch und schnell erfolgen durch z.B. eine niederohmige Messung und einen nachgeschalteten Komparator, der den HV-PWM 2-Regler beeinflußt. Bekanntermaßen sind die LED-Bauelemente außerordentlich überstrom- und temperaturempfindlich. Die Amplitude der einphasigen gleichgerichteten Wechselspannung steigt bekanntlich um den Faktor √2 = 1,4142 auf U₌ = 325 V; die Spannung wird nicht heruntertransformiert, sondern es kommt ein 400 V-Hochvolt (HV)-Transistor zur Anwendung. Für das Schaltungsverfahren oder die -topologie ist die Höhe der Gleichspannung nicht von Bedeutung; es ist unerheblich, ob die Wechselspannung vor dem Gleichrichter mittels eines Transformators nach unten transformiert wird, um eine niedrigere Gleichspannung zu erhalten, oder ob die Gleichspannung über den Gleichrichter direkt aus der Netzspannung generiert wird.

Der Gegenstand der Erfindung wird nachfolgend anhand der als Anlage beigefügten Zeichnungen von Ausführungsbeispielen weiter verdeutlicht. Es zeigen
- **Fig. 1**: Funktionsschaltbild eines Phasenkontrollers als Netzleitungssteuerung
- **Fig. 2**: Funktionsschaltbild des Netzübertragungssystems
**a)** Steuerung, Leitung und Empfänger **b)** Halbwellen-/Zeitdiagramm
**c)** Amplituden-/Zeitdiagramm
- **Fig. 3**: Funktionsschaltbild eines Netzleitungsempfängers.

Gleiche und gleichwirkende Bestandteile der Ausführungsbeispiele sind in den Figuren jeweils mit denselben Bezugszeichen versehen.

Die Beschreibung der erfindungsgemäßen Einrichtung wird fortgesetzt anhand der Erläuterung der Figuren.

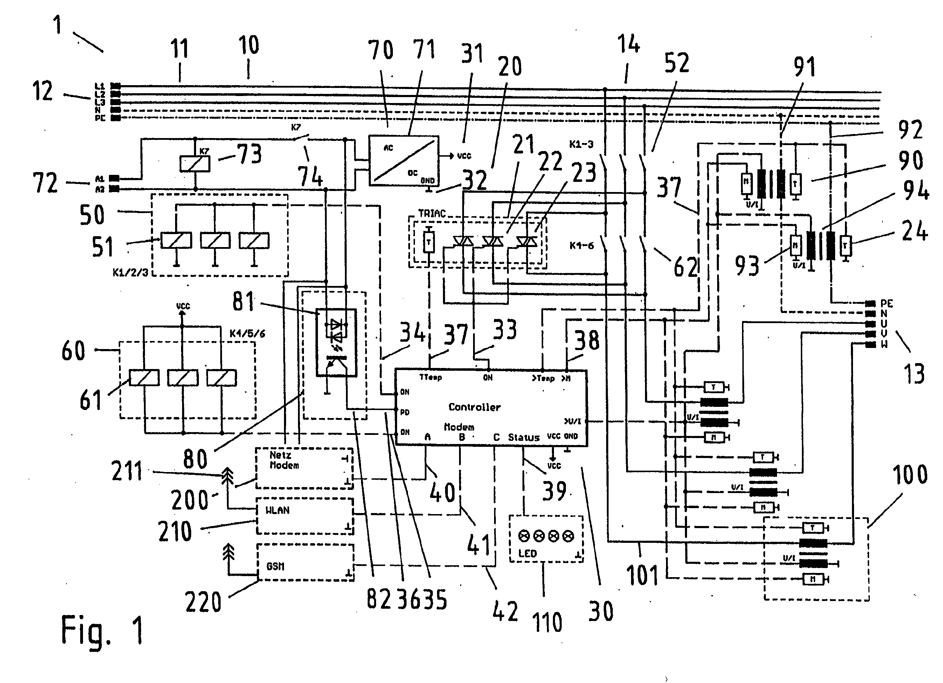

Wie aus **Fig. 1** ersichtlich, besteht der 5-polige elektronische Phasenkontroller aus einem Netzstromkreis **10 ,** einem Halbleiterschalter **20** , einem Mikrokontroller **30 ,** zwei Relaisgruppen **50** und **60 ,** einer Stromversorgung **70 ,** einer Power-down (PD)-Erfassung **80 ,** einer Fehlerstrom (FI)-Analyse **90 ,** einer 3-Phasen-Strommessung **100** , einer Status-LED-Anzeige **110** sowie weiterer Optionen **200** ... **220** .

Der 5-polige Netzstromkreis **10** besteht aus einer Netzleitung **11 ,** hat einen Netzeingang **12** sowie einen Netzausgang **13** . An der Stelle des Netzabgriffs **14** geht der Netzstromkreis über den 3-poligen Kontaktsatz **52** auf den Halbleiterschalter **20** über.

Der Halbleiterschalter **20** ist 3-phasig ausgelegt und mit drei mal zwei Thyristoren **23** in antiparalleler Schaltung bestückt; im Falle größerer Leistungen sind je zwei antiparallele Thyristoren durch in Summe drei TRIAC-Bauelemente ersetzt. Sollen die Phasen nicht nur angeschnitten sondern auch abgeschnitten werden, kommen elektronische IGBT-Steuerbausteine zum Einsatz. Die Halbleiterbauelemente sind üblicherweise elektrisch isoliert und mit gutem Wärmübergang auf einem Kühlrippenkörper **21** montiert und bilden eine Halbleiterbrücke **22** . Die Temperatur des gut wärmeleitenden Kühlkörpers wird mittels des Temperaturfühlers T **24** über den Temperatur-Eingang **37** des Kontrollers **30** überwacht. Der Halbleiterschalter wird über den 3-poligen Kontaktsatz **52** der Kleinspannungsrelais **51** der Relaisgruppe **50** an den Netzstromkreis geschaltet. Die Zündung der Halbleiterbauelemente erfolgt programmgesteuert über den Zündimpulsausgang **33** und die Steuerung der Relaisgruppe über den Relaisausgang 1 **34** des Mikrokontrollers **30** mittels Versorgungsspannung **31 ,** da die Relaisgruppe masseversorgt ist.

Der Mikrokontroller **30** bildet die zentrale Steuerung der elektrischen Steckvorrichtung; er hat eine programmierbare Logik mit Speicherbausteinen mit verschiedenen Betriebsarten-Steuerprogrammen, wie Ein-/Aus-Schaltfunktion bei Phasen-Nulldurchgang, Phasenanschnittsteuerung, Vollwellensteuerung oder Impulspaketsteuerung, inne. Sollen nur die Anlauf- und die Auslaufphasen halbleitergesteuert werden, übernimmt der Mikrokontroller die Koordination zwischen der Ansteuerung der Halbleiterbrücke **33 , 22** und den Relais **61** der Relaisgruppe **60 ,** die über ihren 3-poligen Kontaktsatz **62** den Nennstrom dauerhaft führt. Die Relaisgruppe liegt an der Versorgungsspannung **31** und wird über den Relaisausgang 2 **35** über Massesignal **32** angesteuert. Statusmeldungen des Mikrokontrollers werden über den Ausgang **39** in der Status-LED-Anzeige **110** zur Anzeige gebracht.

Die Stromversorgung **70** besteht aus einem AC/DC-Netzteil **71** für die Spannungsversorgung für die bestückte Leiterplatte mit dem Versorgungsausgang **31** und dem Masseanschluß **32** . Die Spannungsversorgung wird über den 2-poligen Netzanschluß **72** aktiviert, in dem das Niederspannungsrelais **73** über seinen 1-poligen Kontaktsatz **74** schaltet. Es wird angenommen, daß das AC/DC-Netzteil einen Kondensatorpuffer für eine Zeit von ca. 50 ms besitzt.

Mittels eines Optokopplers **81** wird in der Power-down (PD)-Erfassung **80** ein Power-down (PD)-Signal **82** erzeugt und im Mikrokontroller über den Power-down (PD)-Eingang **36** ausgewertet.

Aus den beiden Leitern Null-Leiter N **91** und Schutzleiter PE **92** des Netzstromkreises **10** werden Fehlerstrom (FI)-Analysen **90** durchgeführt, in dem die Leiter über eine (Primär-) Wicklung eines Übertragers **94** geführt werden und auf der Sekundärseite proportionale Strom-/Spannungswerte U/I über eine vergleichende Magnetfeldmessung M **93 ,** z.B. mittels Hall-Sonden, ausgewertet werden. Die Resultate der Magnetfeldmessung werden über den Magnetfeld-Eingang **38** dem Mikrokontroller zur Auswertung zur Verfügung gestellt. Darüber hinaus werden Temperaturwerte T an den Übertragern **94** gemessen und ebenfalls dem Mikrokontroller über den Temperatur-Eingang **37** zwecks Erstellung eines Temperaturprofils zugeleitet.

Nach der gleichen Magnetfeld-Methode M, T **100** werden die Phasenströme L1, L2, L3 bzw. U, V, W **101** des Netzstromkreises **10** überwacht U/I, so daß zu jedem Zeitpunkt die Phasenlast in(t), 1 ≤ n ≤ 3, bekannt ist, d.h. die Ströme nach Amplitude und Zeit werden aufgezeichnet und ausgewertet, es werden vergleichende Obergrenzen festgelegt, die im Fortgang der Messungen nach oben oder unten korrigierbar sind. Bei alarmierenden Überschreitungen werden Schalthandlungen vorgenommen und Statusmeldungen abgesetzt.

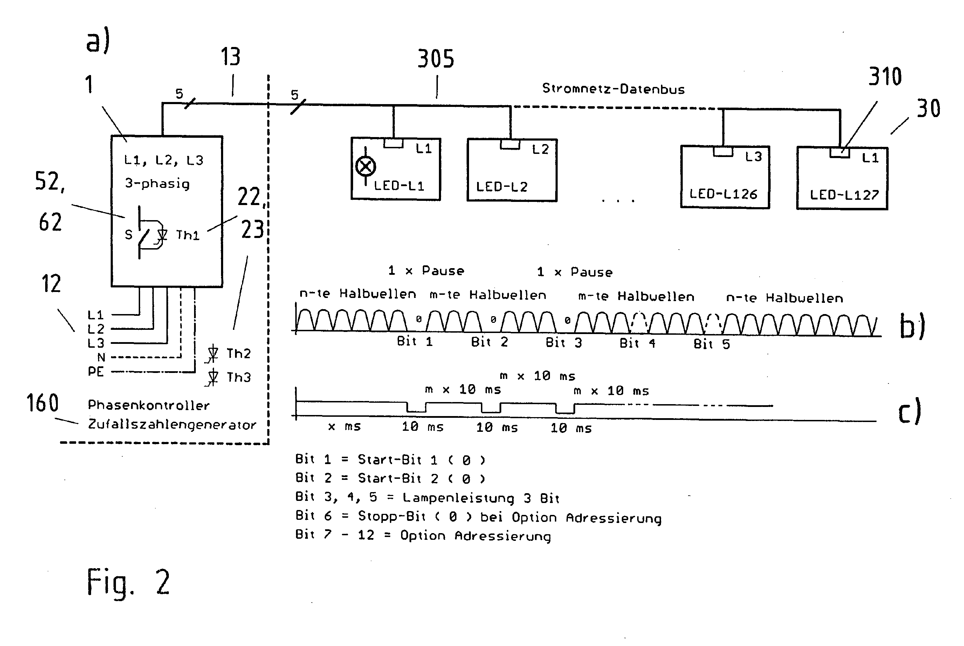

**Fig. 2** zeigt das Funktionsschaltbild des Netzübertragungssystems, **Fig. 2 a)** , bestehend aus Netzleitungssteuerung **1** , Netz-/Übertragungsleitung **13 , 305** und Netzleitungsempfänger **300** . Das System besteht aus einer 3-phasigen Netzleitungssteuerung, einer 1- oder mehrphasigen Netzleitung und einem 1-phasigen Netzleitungsempfänger, der auch das Vorschaltgerät für eine LED-Außenleuchte beinhaltet. Die Netzleitungssteuerung ist ein mikroprozessorgesteuerter nulldurchgangsschaltender Phasenkontroller. Die Steuerung wird händisch fern-/geschaltet oder über eine Zeitschaltuhr, einen Tageslichtsensor oder Dämmerungsschalter ferngeschaltet; lokal ist das Steuermodul in einer Elektroverteilung untergebracht und versorgt und steuert die Außenbeleuchtung eines Straßenzugs. Die Verkabelung der Leuchten kann strang- und phasengerecht erfolgen mit 3-poliger Kabelverlegung L1, N, PE an jede Leuchte des Strangs oder aber auch phasenweise alternierend mit 5-poliger Kabelverlegung, d.h. Phase 1 an Leuchte 1, ... , Phase 3 an Leuchte 3, Phase 1 an Leuchte 4, etc., durchgeschleift über jede Leuchte des Strangs.

Die Netzleitungssteuerung **1 ,** der mikroprozessorgesteuerte Phasenkontroller, sendet positive sinusförmige Halbwellen an das Vorschaltgerät der Leuchte - halbwellenkodierte Netzzuleitung, Stromnetz-Datenbus **13 , 305 ,** **Fig. 2 b)** . Der Netzleitungsempfänger **300 ,** das Vorschaltgerät, empfängt die Halbwellen, paßt die elektrischen Werte der Lampenschaltung an, wertet die Nachrichten aus und steuert die Lichtleistung der Lampe. Nach n Halbwellen folgt eine Pause von einer Halbwelle - Startbit 1, die der Empfänger registriert. Weiterhin werden jetzt die folgenden Halbwellen gezählt; es folgen drei Halbwellen, gefolgt wiederum von einer Pause - Startbit 2 - und nochmals drei Halbwellen und eine Pause. Je nach Kodierungsschlüssel werden weitere Halbwellenmuster gesendet und ausgewertet. Alle Vorschaltgeräte **310** am Strang haben nach Auswertung/-zählung erkannt, daß eine Sendung eines jetzt bekannten Halbwellenmusters bevorsteht. Aus den nächsten drei Sendungen bestehend aus drei Halbwellen gefolgt von einer Pause oder einer Halbwelle, werden das Bit 3, Bit 4 und Bit 5 generiert, ein 3-Bit-Wort, welches sieben Ein-, Aus- und Dimm-Zustände abbilden kann. **Fig. 2 c)** beschreibt ein dem Halbwellen-/Zeitdiagramm angepaßtes Amplituden-/Zeitdiagramm.

Sollen Leuchten **300** bestehend aus Vorschaltgerät **310** und Lampe nicht nur phasen- oder stranggesteuert sein, sondern optional adressierbar sein, wird ein weiteres Halbwellenmuster mit einem Stop-Bit, Bit 6, gesendet, gefolgt von z.B. weiteren Halbwellenmustern zwecks Generierung der Adressenbits 7 bis 12 auf der Empfängerseite zur Erzeugung eines 6-Bit-Worts für die Adressierung von max. 63 Leuchten - Vorschaltgeräten und Lampen - im einphasigen Strang.

Zur Vermeidung starker Netzschwankungen durch leistungsstarke Ein- und Abschaltvorgänge im Leuchtennetzkreis, wird die Netzleitungssteuerung **1** zusätzlich mit einem Zufallszahlengenerator **160** ausgestattet und den Schalt- und Dimmbefehlen noch eine Zufallszahl mitgegeben wird, die empfängerseitig als eine zeitverzögernde Einstellgröße für einen Zähler im Netzleitungsempfänger **300** interpretiert wird, so daß die Schalt- oder Dimmhandlung erst nach Ablauf des Zählvorgangs zur Ausführung gelangt. Im Umkehrschluß kann sich der Zufallszahlengenerator auch in jedem Netzleitungsempfänger des Vorschaltgeräts **310** befinden, der dann angestoßen wird, wenn eine Schalt- oder Dimmhandlung für die Leuchte ansteht, und seine Zufallszahl zeitverzögernd auf das eigentliche Schalten oder Dimmen der Lampe wirkt.

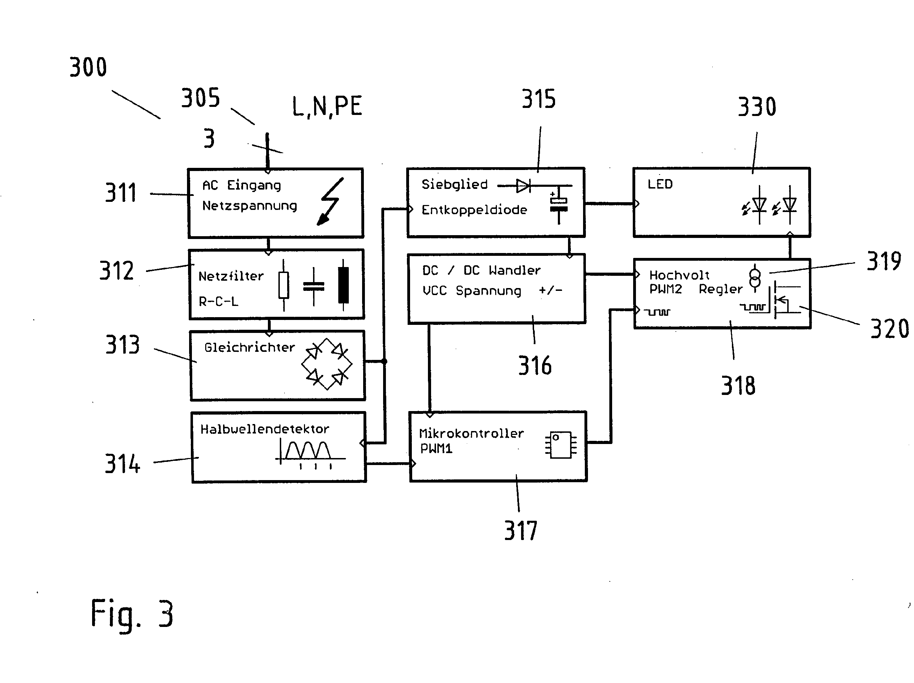

**Fig. 3** zeigt ein Funktionsschaltbild des Netzleitungsempfängers **300** . Die von der Netzleitungssteuerung - dem mikroprozessorgesteuerten Phasenkontroller 1 - über die einphasige Netzleitung **305** gesendete sinusförmige Halbwellen-Netzspannung an den AC-Eingang **311** des Netzleitungsempfängers angeschlossen und über einen R/C/L-Netzfilter **312** einem Brückengleichrichter **313** zugeführt wird. Aus dieser Gleichspannung wird einerseits mittels eines Siebglieds **315** die LED-Lampenversorgungsspannung für die LED-Lampe **330** und mittels eines DC/DC-Wandlers **316** die Versorgungsspannung für den Mikroprozessor **317** und den Hochvolt (HV)-Pulsweiten-Modulation (PWM) 2-Regler **318** abgeleitet. Außerdem wird die Gleichspannung des Gleichrichters mit einem Halbwellendetektor **314** verknüpft, der die gesendeten Halbwellen auf eine Halbwellen-Pausenunterbrechung prüft und das Ergebnis dem Mikroprozessor-Baustein übergibt. Das Siebglied enthält eine Entkoppeldiode sowie einen Ladekondensator, der die Energielücke der Halbwellen-Pausenunterbrechungen gegenüber der LED-Lampenversorgung nachlädt.

Der Netzeingangsfilter **312** filtert Störsignale aus und dient als Überspannungsschutz. Der Gleichrichter **313** sorgt für eine sinusförmig gepulste Gleichspannung mit gleichgerichteten positiven Netzhalbwellen; die LED-Lampe **330** liegt immer am Pluspol des Ladekondensators des Siebglieds **315 -** bedeutet eine Stromquelle. Der Ladekondensator überbrückt auch die Energielücken der Halbwellen-Pause. Die gesiebte Gleichspannung wird über den DC/DC-Wandler **316** zur Versorgungsspannung für den Mikrokontroller **317** und den HV-PWM 2-Regler **318** . Der Halbwellen-Detektor **314** detektiert die Lücken der Halbwellen-Pausen und bereitet das Signal für den Mikrokontroller auf. Der Mikrokontroller prüft die gesendeten Halbwellen auf eine vorliegende Störung oder ein zu sendendes Protokoll. Ein im Mikrokontroller implementierte Pulsweiten-Modulation (PWM) 1 bereitet eine Ein-/Aus-Tastung für die Pulsweiten-Modulation 2 des HV-Reglers vor nach Interpretation der Netzhalbwellen als Protokoll für die Helligkeits-Einstellung. Der Hochvolt (HV)-Pulsweiten-Modulation (PWM) 2-Regler besteht einerseits aus einer Strombegrenzung **319 ,** der den maximalen Strom der Stromquelle begrenzt, sowie andererseits aus einem Metall-Oxid-Halbleiter-Feldeffekttransistor (MOSFET)-Schalter **320 ,** der den Strom gegen Masse schaltet und eine Stromsenke für den Lampenstrom darstellt.

Vorteilhafte Weiterentwicklungen der Erfindung sind Gegenstand der Unteransprüche; die zahlreichen Möglichkeiten und Vorteile der Ausgestaltung der Erfindung spiegeln sich in der Anzahl der Schutzrechtsansprüche wider.

**Bezugszeichenliste**

| | |
|---|---|
| 1 | Phasenkontroller, elektronisch, 5-polig |
| | |
| 10 | Netzstromkreis, 5-polig |
| 11 | Netzleitung |
| 12 | Netzeingang |
| 13 | Netzausgang |
| 14 | Netzabgang, -griff, -zweig |
| | |
| 20 | Halbleiterschalter, 3-phasig |
| 21 | Kühlrippenkörper |
| 22 | Halbleiterbrücke |
| 23 | Halbleiterbauelement |
| 24 | Temperaturfühler |
| | |
| 30 | Mikrokontroller |
| 31 | Versorgungsspannung |
| 32 | Masseanschluß |
| 33 | Zündimpulsausgang |
| 34 | Relaisausgang 1 |
| 35 | Relaisausgang 2 |
| 36 | Power-down (PD)-Eingang |
| 37 | Temperatur-Eingang |
| 38 | Magnetfeld-Eingang |
| 39 | Status-Anzeige |
| 40 | Modem Netzübertragung |
| 41 | Modem WLAN (Wireless Local Area Network) |
| 42 | Modem GSM (Global System for Mobile Communication |
| | |
| 50 | Relaisgruppe |
| 51 | Relais, Kleinspannung, 12 VDC/24 VDC |
| 52 | Kontaktsatz, 3-polig |
| | |
| 60 | Relaisgruppe |
| 61 | Relais, Kleinspannung, 12 VDC/24 VDC |
| 62 | Kontaktsatz, 3-polig |
| | |
| 70 | Stromversorgung |
| 71 | AC/DC-Netzteil, 230 VAC/12 VDC |
| 72 | Netzanschluß, 2-polig, 230 VAC |
| 73 | Relais, Niederspannung, 230 VAC |
| 74 | Kontaktsatz, 1-polig |
| | |
| 80 | Power-down (PD)-Erfassung |
| 81 | Optokoppler |
| 82 | Power-down (PD)-Signal |
| 90 | Fehlerstrom (FI)-Analyse |
| 91 | Null-Leiteranschluß |
| 92 | Schutzleiter-Anschluß |
| 93 | Magnetfeld-Sensor |
| 94 | Übertrager |
| | |
| 100 | Strommessung, 3-phasig |
| 101 | Phase L1, L2, L3 |
| | |
| 110 | Status-LED-Anzeige |
| | |
| 160 | Zufallszahlengenerator |
| | |
| 200 | Netz-Modem |
| | |
| 210 | WLAN-Modem |
| 211 | Antenne |
| | |
| 220 | GSM-Modem |
| | |
| 300 | Netzleitungsempfänger |
| 305 | Netzleitung, Stromnetz-Datenbus |
| | |
| 310 | Vorschaltgerät |
| 311 | AC-Eingang Netzspannung |
| 312 | R/C/L-Netzfilter |
| 313 | Gleichrichter |
| 314 | Halbwellendetektor |
| 315 | Siebglied /Entkoppeldiode |
| 316 | DC/DC-Wandler |
| 317 | Mikroprozessor / Pulsweiten-Modulation (PWM) 1 |
| 318 | Hochvolt (HV)-PWM 2-Regler |
| 319 | Strombegrenzung |
| 320 | Metall-Oxid-Halbleiter-Feldeffekttransistor (MOSFET)-Schalter |
| | |
| 330 | LED-Lampe |

## Patentansprüche

1. Netzübertragungssystem mit Steuerung, Leitung und Empfänger - insbesondere für das Übertragen eines Vorschaltgeräte-Dimmniveaus an ein elektronisches Vorschaltgerät über eine Wechselstromzuleitung - bestehend aus einem ein- oder mehrphasigen mikroprozessorgesteuerten nulldurchgangsschaltenden Phasenkontroller (1) als Netzleitungssteuerung, einer halbwellenkodierten Netzzuleitung als Stromnetz-Datenbus (13) sowie einem Netzleitungsempfänger (300) mit Vorschaltgeräte-Eigenschaften, **dadurch gekennzeichnet, daß**
- der gesteuerte Phasenkontroller sinusförmige positive oder negative, energieführende Halbwellen an den Netzleitungsempfänger sendet, wobei durch die gezielte Unterbrechung des Sendens einzelner Halbwellen durch die Netzleitungssteuerung eine Kodierung geschaffen ist, die auf der Netzleitungsempfängerseite durch Dekodierung der Netzspannung ein Steuersignal generiert.

2. Netzübertragungssystem mit Steuerung, Leitung und Empfänger nach Anspruch 1, **dadurch gekennzeichnet, daß**
- die Dekodierung der Netzspannung durch Zählung der Halbwellen vor und/oder nach einer Halbwellenpause oder -unterbrechung nach einem vorgegebenem und an diesem gespiegelten Halbwellenmuster erfolgt.

3. Netzübertragungssystem mit Steuerung, Leitung und Empfänger nach mindestens einem der Ansprüche 1 und 2, **dadurch gekennzeichnet, daß**
- der Kodierungsschlüssel aus Halbwellenmustern, bestehend aus Halbwellen und Halbwellenpausen oder -unterbrechungen, gebildet ist.

4. Netzübertragungssystem mit Steuerung, Leitung und Empfänger nach mindestens einem der Ansprüche 1 bis 3, **dadurch gekennzeichnet, daß**
- die Halbwellenmuster durch die Netzleitungssteuerung (1) nach Vereinbarung wiederholt gesendet werden und nach n Anzahl richtigen Empfängen aus m Anzahl richtigen Sendungen als 'wahr' entschlüsselt werden, wobei Anzahl m > Anzahl n.

5. Netzübertragungssystem mit Steuerung, Leitung und Empfänger nach mindestens einem der Ansprüche 1 bis 4, **dadurch gekennzeichnet, daß**
- der Netzleitungsempfänger (300) ein Siebglied (315) hat, welches einen Ladekondensator aufweist, der die Energielücken aus den Halbwellenpausen oder -unterbrechungen kompensierend ausgleicht.

6. Netzübertragungssystem mit Steuerung, Leitung und Empfänger nach mindestens einem der Ansprüche 1 bis 5, **dadurch gekennzeichnet, daß**
- die Netzleitungsempfänger (300) nicht nur phasen- oder stranggesteuert sind, sondern optional einzeln oder in Gruppen adressierbar sind, wobei der zwischen Netzleitungssteuerung (1) und Netzleitungsempfänger vereinbarte Adressenkode aus weiteren Halbwellenmustern gebildet wird.

7. Netzübertragungssystem mit Steuerung, Leitung und Empfänger nach mindestens einem der Ansprüche 1 bis 6, **dadurch gekennzeichnet, daß**
- die Netzleitungssteuerung (1) über einen Zufallszahlengenerator (160) verfügt und den kodierten Schalt- und Dimmbefehlen noch eine Zufallszahl mitgegeben wird, die empfängerseitig als eine zeitverzögernde Einstellgröße für einen Zähler im Netzleitungsempfänger (300) interpretiert wird, so daß die Schalt- oder Dimmhandlung erst nach Ablauf des Zählvorgangs zur Ausführung gelangt, oder
- sich der Zufallszahlengenerator in jedem Netzleitungsempfänger befindet, der dann angestoßen wird, wenn eine Schalt- oder Dimmhandlung von der Netzleitungssteuerung aufgerufen und von dem Netzleitungsempfänger dekodiert ist, und seine Zufallszahl zeitverzögernd auf das eigentliche Schalten oder Dimmen wirkt.

8. Netzübertragungssystem mit Steuerung, Leitung und Empfänger nach mindestens einem der Ansprüche 1 bis 7, **dadurch gekennzeichnet, daß**
- ein Halbwellendetektor (314) im Netzleitungsempfänger (300) Halbwellenpausen oder -unterbrechungen detektiert, der Mikrokontroller (317) diese Pausen oder Unterbrechungen als Schalt- oder Dimmbefehle interpretiert und Helligkeitseinstellungen pulsweitenmoduliert.

9. Netzübertragungssystem mit Steuerung, Leitung und Empfänger nach mindestens einem der Ansprüche 1 bis 8, **dadurch gekennzeichnet, daß**
- der Netzleitungsempfänger (300) einen Hochvolt (HV)-Pulsweiten-Modulations (PWM)-Regler (318) besitzt mit einem schnellen zyklischen Stromwandler (319) und nachgeschaltetem Komparator als Strombegrenzer, der auf den den Strom gegen Masse schaltenden Metall-Oxid-Halbleiter-Feldeffekttransistor (MOSFET)-Halbleiterschalter (320) als Stromsenke wirkt.

10. Netzübertragungssystem mit Steuerung, Leitung und Empfänger nach mindestens einem der Ansprüche 1 bis 9, **dadurch gekennzeichnet, daß**
- der Netzleitungsempfänger (300) einen DC/DC-Wandler (316) oder alternativ einen galvanisch trennenden Transformator mit Gleichrichtung für die Stromversorgung der elektronischen Bauteile wie Mikrokontroller (317) oder HV-PWM-Regler (318) besitzt.
